# EUROPÄISCHE PATENTSCHRIFT

(11) **EP 0 518 052 B1**
(45) Veröffentlichungstag und Bekanntmachung des Hinweises auf die Patenterteilung: **26.10.1994**
(21) Anmeldenummer: 92107812.7
(22) Anmeldetag: 08.05.1992
(51) Int. Cl.: F16C 19/54

(54) **Lagerungseinheit**
Bearing assembly
Unité de palier

(30) Priorität: 10.05.1991 DE 4115217
(43) Veröffentlichungstag der Anmeldung: 16.12.1992
(73) Patentinhaber: DEERE & COMPANY, Moline, Illinois 61265 (US)
(72) Erfinder: Eckhardt, Uli, W-6720 Speyer (DE); Schmitt, Bruno, W-6840 Lampertheim (DE)
(74) Vertreter: Feldmann, Bernhard

(56) Entgegenhaltungen:
- DE-A- 2 738 287
- DE-B- 1 199 585
- FR-A- 2 167 551
- FR-A- 2 455 208
- US-A- 3 795 456

## Beschreibung

Die Erfindung betrifft eine Lagerungseinheit für eine Biegekräften ausgesetzte, axiale Kräfte aufnehmende Getriebewelle, wie beispielsweise eine Differentialantriebswelle mit Kegelritzel eines Fahrzeuggetriebes. Die Lagerungseinheit besteht aus wenigstens einem radialen Zylinderrollenlager und zwei Axiallagern. Der innere Lagerring des radialen Zylinderrollenlagers stützt sich radial sowie in einer axialen Richtung an der Welle ab. Die Axiallager sind beidseits eines sich an dem Getriebegehäuse befestigbaren Lagergehäuses angeordnet und stützen sich an diesem ab. Das dem radialen Zylinderrollenlager zugewandte Axiallager stützt sich dabei in der genannten Richtung an dem inneren Lagerring des radialen Zylinderrollenlagers ab. Das radiale Zylinderrollenlager und die Axiallager sind ferner gegen eine axiale Verschiebung auf der Welle festgelegt.

Insbesondere in Getriebe-Antriebssträngen von landwirtschaftlichen oder anderen Nutzfahrzeugen, wie Ackerschleppern, sind Getriebewellen anzutreffen, die ihre Drehzahl und ihr Drehmoment über eine Kegelverzahnung an eine weitere Getriebewelle weiterleiten. Üblicherweise werden diese Getriebewellen als Differentialantriebswellen bezeichnet. Im allgemeinen entstehen bei dieser Art von Getriebewellen an der Kegelverzahnung sehr hohe radiale und axiale Kräfte, welche gemäß bekannter Konstruktionen von Kegelrollenlagern, Zylinderrollenlagern, Kugellagern, Vierpunktlagern oder Kombinationen der genannten Lager aufgenommen werden.

Um die Übertragung hoher Leistungen zu ermöglichen, ohne daß die Getriebeabmessungen zu groß werden, wird die Drehzahl der Getriebewellen angehoben. Dies geschieht hauptsächlich im Bereich des Schaltgetriebeanteils, welcher die Differentialantriebswelle mit einschließt. Durch diese Maßnahme können die auftretenden Spannungen an Wellen und Zahnrädern klein gehalten werden. Die höheren Drehzahlen führen jedoch für die Getriebelager zu gesteigerten Anforderungen an die Drehzahlgrenze sowie zu mit der Drehzahl steigenden Verlustleistungen.

Differentialantriebswellen werden heute zumeist in Kegelrollenlagern gelagert, welche erst durch Einstellung einer höheren axialen Vorspannung zu ihrer Tragfähigkeit gelangen. Dies führt jedoch bei höheren Drehzahlen zu stark wachsenden Verlustleistungen, welche heute nicht mehr in Kauf genommen werden können.

Auch steigenden Ansprüchen an eine einfache und schnelle Erstmontage sowie an eine einfache Demontage und Montage mit einfachen Werkzeugen im Reparaturfall von Fahrzeuggetrieben kann die Auswahl von Kegelrollenlagern nicht mehr Rechnung tragen. Eine genaue Einstellung der Vorspannung ist nur mit teuren Meß- und Montagemitteln möglich, und nicht zuletzt muß hier geschultes Personal zur Verfügung stehen. Dies ist jedoch beim Export von Fahrzeugen, z. B. in weniger hoch technisierte Länder nicht immer gewährleistet.

Die Auswahl von radialen Zylinderrollenlagern in Verbindung mit Kugellagern oder Vierpunktlagern, wie sie aus der deutschen Zeitschrift "Wälzlagertechnik" FAG 1984/2 Porsche-Rennsportwagen 956 - Höchstleistung auch für Wälzlager, S. 28 hervorgeht, ist nicht immer günstig. Zum einen ist die Auswahl eines radialen Zylinderrollenlagers mit einem Kugellager für hohe Kräfte nicht möglich, da der größere benötigte Bauraum zumeist nicht zur Verfügung steht. Zum anderen führt die Auswahl eines radialen Zylinderrollenlagers mit einem Vierpunktlager zu unerwünschten Kostensteigerungen.

Aus der deutschen Publikation von FAG Kugelfischer Georg Schäfer & Co. Schweinfurt, "Die Gestaltung von Wälzlagern", Publ.-Nr. 00200 DA, 1970, Seite 59 geht eine Lkw-Ritzellagerung der eingangs genannten Art hervor, bei der die Radialkräfte mit zwei radialen Zylinderrollenlagern und die Axialkräfte mit zwei Axial-Schrägkugellagern getrennt aufgenommen werden. Bei dieser Lagerung sollen sich niedrige Reibung, Temperatur und Verschleiß bei hoher Drehzahlgrenze und Steifigkeit ergeben. Jedoch erfordern Axial-Schrägkugellager einen relativ hohen Herstellungsaufwand, der mit höheren Kosten verbunden ist. Das Ritzel kann durch Einlegen von Paßscheiben zwischen einer zwischen den Axial-Schrägkugellagern eingespannten Winkelbüchse und dem Getriebegehäuse axial eingestellt, d. h. in die richtige Lage zum Tellerrad gebracht werden.

Aus Seite 15 der gleichen Publikation geht eine Lagerung für eine Drehbankspindel hervor, bei der ein radiales Zylinderrollenlager mit zwei axialen Kugellagern kombiniert ist. Die Anwendung von axialen Kugellagern, deren Lebensdauer mit zunehmender Verkippung der Wellenachse im Bereich der Lagerstelle rasch abnimmt, ist hier möglich, da eine Drehbankspindel sich nicht durchbiegen darf und daher relativ dick ausgebildet ist.

Bei Getriebewellen, die aus Gewichts- und Kostengründen relativ dünn ausgebildet werden und sich aufgrund von auf ihrem Umfang angreifenden unterschiedlichen Belastungen durchbiegen (eine Durchbiegung kann beispielsweise bei Getriebewellen auftreten, auf die einseitige Zahnkräfte einwirken), werden die Axiallager auf ihrem Umfang ungleichmäßig belastet und müssen infolgedessen entsprechend massiv ausgelegt werden. Die Durchbiegung der Getriebewelle kann zu einer überhöhten Belastung von axialen Kugel- und Rollenlagern führen, deren Lebensdauer mit steigendem Verkippwinkel rasch absinkt. Bei konventionellen Lagerungen z. B. mit Kegelrollenlagern oder bei Lagerungen mit Axial-Schrägkugellagern wirken sich Wellendurchbiegungen nicht so nachteilig aus wie bei einfachen axialen Kugel- oder Rollenlagern, da erstere einen größeren Winkelfehler zulassen als letztere.

Die mit der Erfindung zu lösende Aufgabe wird darin gesehen, eine Lagerungseinheit der eingangs genannten Art anzugeben, durch die die genannten Probleme überwunden werden, die insbesondere kompakt ausbildbar ist und wenig Bauraum beansprucht, die einfach herstellbare Lager enthält, die bei hohen Drehzahlen geringe Verlustleistungen aufweist und die eine einfache Montage und Einstellung des Kegelspitzenabstandes einer Differentialgetriebewelle ermöglicht.

Die Aufgabe wird erfindungsgemäß dadurch gelöst, daß die Axiallager axiale Zylinderrollenlager sind und daß das Lagergehäuse und/oder dessen Befestigung am Getriebegehäuse derart nachgiebig ausgebildet sind, daß sich das Lagergehäuse mit seinen Bereichen, an denen sich die axialen Zylinderrollenlager abstützen, bei einer Wellendurchbiegung der Neigung der Getriebewelle anpaßt.

Getriebewellen, die durch schräg verzahnte Zahnräder oder Kegelräder einseitig belastet werden, biegen sich mit zunehmender Belastung der Zahnräder durch. Wegen der Schrägverzahnung wirken auf die Getriebewelle gleichzeitig axiale Kräfte, die ebenfalls mit wachsender Belastung der Zahnräder zunehmen. Diese zentrischen Axialkräfte werden durch die Axiallager auf das Lagergehäuse übertragen. Bei einer Neigung der Getriebewelle im Bereich der Axiallager, die sich aufgrund der Durchbiegung einstellt, können die Axiallager hinsichtlich ihres Umfanges einer unsymmetrischen Axiallast ausgesetzt sein, was bei axialen Zylinderrollenlagern die Lagerlebensdauer erheblich vermindern würde. Erfindungsgemäß gibt das Lagergehäuse unter der axialen Belastung nach und stellt sich mit seinen an den Gehäusescheiben der axialen Zylinderrollenlager anliegenden Flächen senkrecht zu der Tangente der Wellenbiegelinie im Lagerbereich ein. Hierdurch tragen die axialen Zylinderrollenlager auf ihrem ganzen Umfang weitgehend gleichmäßig. Erst diese gleichmäßige Belastung der Lager macht die Anwendung von axialen Zylinderrollenlagern in Antriebssträngen von Fahrzeuggetrieben möglich.

Die erfindungsgemäße Lagerungseinheit ermöglicht den Einsatz relativ kleiner, einfach und kostengünstig herstellbarer axialer Zylinderrollenlager und damit eine kompakte Ausbildung der Lagerungseinheit, die dennoch zur Aufnahme von großen radialen und axialen Kräften bei hohen Drehzahlen geeignet ist. Dabei ist die Axiallagereinheit in beiden Richtungen auf der Welle gegen axiale Verschiebung festgelegt, so daß die aus den axialen Zylinderrollenlagern bestehende AIiallagereinheit beidseits belastbar ist. Die erfindungsgemäße Lagerungseinheit weist bei hohen Drehzahlen sehr geringe Verlustleistungen auf. Bei einer Differentialantriebswelle läßt sich das Maß zur Einstellung des Kegelspitzenabstandes mit einfachen Mitteln, z. B. mit einer Schieblehre, messen und durch Zugabe von Beilegscheiben einstellen. Das Messen und Einstellen des Rollmomentes entfällt bei der erfindungsgemäßen Lagerungseinheit, da keine Kegelrollenlager verwendet werden. Ferner ist eine komplette Vormontage der erfindungsgemäßen Lagerungseinheit auf der Welle außerhalb des Getriebegehäuses möglich, da das Lagergehäuse bereits vor der Endmontage an der Axiallagereinheit befestigbar ist. Einstellarbeiten, Meßarbeiten und Funktionsprüfungen, z. B. von auf der Welle montierten Synchronrädern und Synchroneinheiten, können somit außerhalb des Getriebegehäuses erfolgen.

Für die Ausbildung als kompakte, komplett vormontierbare Baueinheit, anhand derer sich das Maß zur Einstellung des Kegelspitzenabstandes einer Differentialantriebswelle unmittelbar messen läßt und die aus den radialen und den axialen Zylinderrollenlagern sowie dem Lagergehäuse besteht, ist es vorteilhaft, ein radiales Zylinderrollenlager zu verwenden, dessen äußerer Lagerring seitliche Borde aufweist, die die Lagerrollen gegen eine axiale Verschiebung festlegen. Derartige Zylinderrollenlager fallen unter die Bauform NUP. Der innere Lagerring hat nur einen sich axial an der Welle abstützenden Bord. Auf seiner anderen Seite liegen die Rollen unmittelbar an der seitlichen Scheibe des benachbarten axialen Zylinderrollenlagers an. Bei einer derartigen Ausbildung ist der äußere Lagerring des radialen Zylinderrollenlagers fester Bestandteil der Lagerungseinheit, auch dann, wenn diese noch nicht ins Getriebegehäuse eingesetzt ist. Die axial äußeren Flächen der beiden Lagerringe fluchten miteinander und lassen eine Messung des oben genannten Maßes zur Einstellung des Kegelspitzenabstandes auch dann zu, wenn der innere Lagerring nicht zugänglich ist.

Zur Einstellung der axialen Lage der Welle, beispielsweise zur Einstellung des erforderlichen Kegelspitzenabstandes bei einer Kegelverzahnung, sind zweckmäßigerweise zwischen Lagergehäuse und Getriebegehäuse axiale Distanzierungsmittel einfügbar. Hierbei kann es sich um Beilegscheiben unterschiedlicher Dicke handeln, die je nach Anforderung auswählbar und vorzugsweise zwischen eine sich radial erstreckende Anlagefläche das Lagergehäuses und eine korrespondierende radiale Anlagefläche des Getriebegehäuses einfügbar sind. Die Anlagefläche des Lagergehäuses kann über die radiale Erstreckung des Radiallagers hinausragen, so daß der Abstand zwischen der Anlagefläche und der in die gleiche Richtung weisenden Seitenfläche des Radiallagers, der maßgeblich für die axiale Lage der Welle ist, sich problemlos mit Hilfe einer Schieblehre messen läßt. Diese Messung ist auch dann möglich, wenn eine Kegelverzahnung mit einer Spiralverzahnung ausgeführt ist und radial über den Innenring des Radiallagers hinausragt.

Vorzugsweise enthalten die beiden axialen Zylinderrollenlager je eine Gehäusescheibe, an denen sich das Lagergehäuse abstützt.

Trotz anfänglicher Bedenken hat es sich gezeigt, daß durch eine gezielte Auslegung der axialen Vorspannung der axialen Zylinderrollenlager und durch eine geeignete Dosierung der Axiallagerschmierung sehr gute Lagerlebensdauern erreichbar sind. Die axiale Vorspannung ist im Vergleich zur erforderlichen Vorspannung für Kegelrollenlager sehr gering. Insbesondere muß gewährleistet sein, daß in allen Betriebszuständen die Lagerrollen abrollen und nicht gleiten, da das Gleiten zu einem Materialabtrag führen kann.

Einer weiteren Ausgestaltung der Erfindung zufolge liegt beidseits des Lagergehäuses je eine das Lagergehäuse tragende Gehäusescheibe eines zugehörigen axialen Zylinderrollenlagers an, und es ist im Lagergehäuse wenigstens eine Ausnehmung vorgesehen, die wenigstens ein Federelement aufnimmt, durch das die beiden Gehäusescheiben voneinander weg gedrückt werden. Bei den Federelementen kann es sich um Druckfedern handeln, durch die die Rollen der sich gegenüberstehenden axialen Zylinderrollenlager etwas vorbelastet werden, so daß ein Abrollen der Rollen auf den Lagerscheiben gewährleistet ist und kein Gleiten auftritt.

Um eine axiale Verschiebung der Lagerungseinheit auf der Welle zu verhindern, ist zweckmäßigerweise ein Sicherungsring in eine Nut der Welle eingesetzt, und zwar auf der dem Radiallager axial abgewandten Seite der Axiallagereinheit. Vorzugsweise wird die Lage und Breite der Nut so ausgelegt, daß sie verschieden dicke Sicherungsringe aufzunehmen vermag. Durch eine geeignete Auswahl der Dicke des Sicherungsringes lassen sich axiale Fertigungstoleranzen des Radiallagers und der Axiallagereinheit ausgleichen.

Für einen angemessenen Schmiermittelzufluß zu der Axiallagereinheit oder den einzelnen axialen Zylinderrollenlagern ist es vorteilhaft, in der Welle eine im wesentlichen axial ausgerichtete Schmiermittelbohrung und wenigstens eine mit dieser verbundene Querbohrung vorzusehen, wobei die Querbohrung nach oben gerichtet ist und im Bereich des axialen Zylinderrollenlagers mündet. Im Bereich der Austrittsöffnung der Querbohrung ist in die Mantelfläche der Welle eine Nut eingelassen, so daß sich die Schmierflüssigkeit über die axiale Erstreckung des Axiallagers verteilen kann. Die Nut kann als eine sich in axialer Richtung erstreckende ovale Tasche auf der Wellenoberfläche ausgebildet sein.

Für eine ausreichende Anpassung des Lagergehäuses an eine Wellendurchbiegung ist vorzugsweise die Befestigung des Lagergehäuses am Getriebegehäuse flexibel ausgelegt. Hierbei ist das Lagergehäuse an dem Getriebegehäuse durch axial ausgerichtete Schrauben befestigt, die als Dehnschrauben ausgelegt sind und bei einer axialen Belastung der Welle eine Verkippung des Lagergehäuses gegen das Getriebegehäuse zulassen. Die Federkennlinie der Dehnschrauben kann den Anforderungen entsprechend ausgelegt werden, so daß die sich auf die Lager auswirkenden axialen Kräfte und Stöße weitgehend gedämpft werden.

Da bei einer Wellendurchbiegung die Kräfte nicht gleichmäßig auf den Umfang des Lagergehäuses verteilt sind, schlägt eine Weiterbildung der Erfindung vor, daß die Dehnschrauben nicht gleichmäßig auf dem Umfang des Lagergehäuses verteilt sind, sondern daß sich in Umfangsbereichen des Lagergehäuses, die erhöhten Kräften infolge von Wellendurchbiegungen ausgesetzt sind, weniger Schrauben angeordnet sind als in weniger stark belasteten Umfangsbereichen.

Um eine gleichmäßige Lagerbelastung bei Durchbiegung der Welle zu erreichen, weist gemäß einer bevorzugten Ausgestaltung der Erfindung das Lagergehäuse in einem radialen Ringbereich zwischen der Anlage des axialen Zylinderrollenlagers und dem Befestigungsbereich an dem Getriebegehäuse in Umfangsrichtung Abschnitte unterschiedlicher Steifigkeit auf. Die Steifigkeit des Lagergehäuses wird in solchen Umfangsbereichen vermindert, d. h. weicher und nachgiebiger gemacht, in denen das axiale Zylinderrollenlager bei einem steif ausgebildeten Lagergehäuse die Hauptlast zu tragen hätte, und in solchen Umfangsabschnitten erhöht, in denen das Zylinderrollenlager nur wenig Last aufnehmen würde. Damit gibt das Lagergehäuse bei Belastung teilweise nach und paßt sich der Wellendurchbiegung an. Hierdurch trägt die Lagereinheit auf ihrem ganzen Umfang und ermöglicht eine gleichmäßige Belastung der axialen Zylinderrollenlager.

Der innere Ringbereich des Lagergehäuses, an dem die Gehäusescheiben der axialen Zylinderrollenlager anliegen, sollte hingegen als steifer Ring ausgebildet sein, der an einer Verformung des übrigen Lagergehäuses nicht teilnimmt. Die an der Gehäusescheibe anliegenden Flächen des Ringbereichs richten sich in einer Ebene aus, die senkrecht zu der Tangente der Wellenbiegelinie im Lagerbereich liegt.

Vorzugsweise weist hierbei das Lagergehäuse in einem konzentrischen Ringbereich zwischen der radial innenliegenden Befestigung an dem Axiallager und der radial außenliegenden Befestigung am Getriebegehäuse in Umfangsrichtung Bereiche unterschiedlicher axialer Dicke auf. Die Dickenunterschiede können zweckmäßigerweise durch eine Ringnut mit in Umfangsrichtung unterschiedlicher Tiefe oder durch eine Ausbildung mit keilförmigem Querschnitt realisiert werden.

Gemäß einer Weiterbildung der Erfindung verläuft die Ringnut konzentrisch zu einer Achse, die gegenüber der Achse des Lagergehäuses etwas geneigt ist. Der Neigungswinkel hängt von der erforderlichen Verformung des Lagergehäuses ab und kann wenige Grad betragen.

Der Grad der Lagerbelastung und die daraus resultierenden erforderlichen Steifigkeitsunterschiede lassen sich durch Untersuchungen mit Dehnungsmeßstreifen ermitteln.

Es wurde herausgefunden, daß eine kontinuierliche Verringerung der Materialstärke längs einer Querschnittslinie dazu führen kann, daß das Lagergehäuse sich längs einer senkrecht zur Querschnittslinie verlaufenden Linie knickförmig verformt. Es ist daher zweckmäßig, auf wenigstens einer Seitenfläche des Lagergehäuses in den Ringbereich sich im wesentlichen in Umfangsrichtung erstreckende Taschen vorzusehen. Länge, Breite und Form der Taschen werden so ausgelegt, daß sie der knickförmigen Verformung entgegenwirken.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig. 1: einen Längsschnitt durch eine erfindungsgemäße Lagerungseinheit,
- Fig. 2: einen Axialschnitt durch das Lagergehäuse längs der Linie 2 - 2 in Fig. 3,
- Fig. 3: eine Seitenansicht des Lagergehäuses und
- Fig. 4: einen Ausschnitt des Lagergehäuses längs eines Schnittes 3 - 3 in Fig. 3.

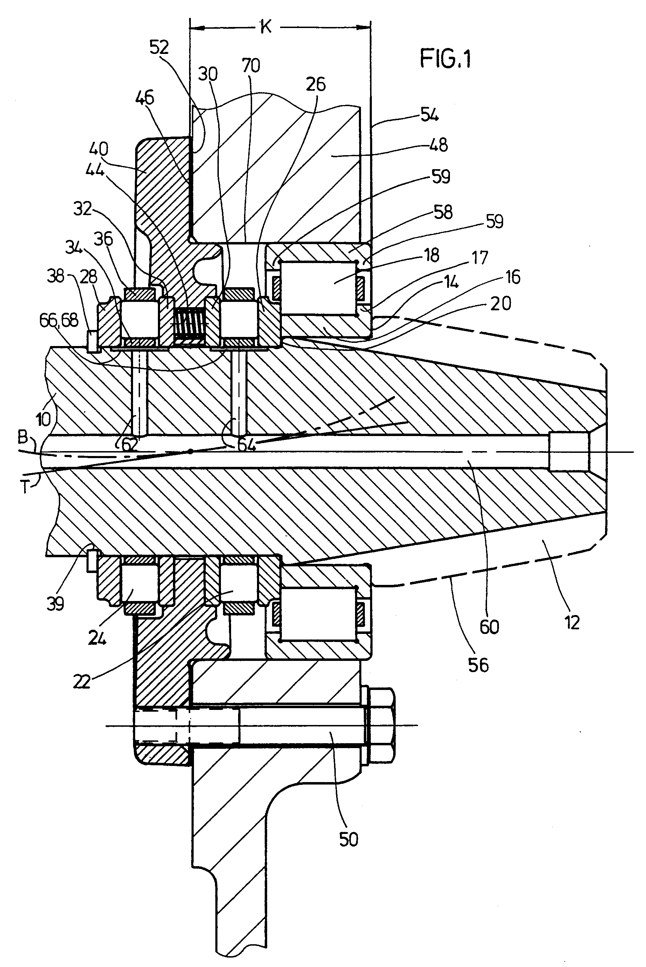

In Fig. 1 ist eine Getriebewelle 10 mit einem Kegelritzel 12 dargestellt, bei der es sich z. B. um eine Differentialantriebswelle für das Getriebe eines Ackerschleppers handelt. Die Getriebewelle 10 weist im Anschluß der Kegelverzahnung eine Schulter 14 auf, an der der innere Lagerring 16 eines radialen Zylinderrollenlagers 18 der NUP-Bauform anliegt und sich in axialer Richtung (nach rechts) abstützt. Der innere Lagerring 16 weist nur auf der der Schulter 14 zugewandten Seite einen Bord 17 auf, der die Lagerrollen in axialer Richtung festlegt. Auf der Getriebewelle 10 ist eine weitere Schulter 20 vorgesehen, die einen Abstand zur erstgenannten Schulter 14 einnimmt, der etwas geringer ist als die Breite des inneren Lagerringes 16.

Die Getriebewelle 10 nimmt auf der dem Kegelritzel 12 abgewandten Seite des radialen Zylinderrollenlagers 18 eine Axiallagereinheit auf, die aus zwei axialen Zylinderrollenlagern 22, 24 besteht. Jedes dieser Zylinderrollenlager 22, 24 enthält im wesentlichen eine Wellenscheibe 26, 28, eine Gehäusescheibe 30, 32, zwischen den Scheiben 26 und 30 bzw. 28 und 32 angeordnete Zylinderrollen und einen Käfig. Der Käfig enthält einen Innenring 34 und einem Außenring 36. Der Außenring 36 ist in seiner radialen Erstreckung verstärkt ausgebildet, um ein Ausbrechen der Zylinderrollen zu vermeiden.

Die Wellenscheibe 26 des dem radialen Zylinderrollenlager 18 benachbarten axialen Zylinderrollenlagers 22 stützt sich axial an dem inneren Lagerring 16 ab und legt die Lagerrollen des radialen Zylinderrollenlagers 18 in axialer Richtung fest, während die Wellenscheibe 28 des anderen axialen Zylinderrollenlagers 24 durch einen Sicherungsring 38 an einer axialen Verschiebung gehindert wird. Der Sicherungsring 38 wird von einer Nut 39 in der Wellenoberfläche aufgenommen, die deutlich breiter ist als die Stärke des Sicherungsringes 38.

Dies ermöglicht den Einsatz von Sicherungsringen 38 unterschiedlicher Stärken, wodurch sich Fertigungstoleranzen der zwischen der erstgenannten Schulter 14 und dem Sicherungsring 38 angeordneten und gegen eine axiale Verschiebung gesicherten Bauteile ausgleichen lassen. Hierdurch läßt sich z. B. ein axiales Spiel der Getriebewelle 10 einstellen, das kleiner als 0,1 mm ist.

Der Sicherungsring 38 kann, was jedoch nicht dargestellt wurde, durch eine Mutter ersetzt werden, wodurch sich die axiale Einstellung der Getriebewelle noch einfacher gestalten würde. Jedoch führt diese Maßnahme zur Kosten- und Bauraumerhöhung der Lagerungseinheit, zumal die Mutter noch gegen Aufdrehen gesichert werden müßte.

Zwischen den Gehäusescheiben 30, 32 der beiden axialen Zylinderrollenlager 22, 24 ist ein Lagergehäuse 40 eingespannt. Das Lagergehäuse 40 enthält auf einem inneren Teilkreis fünf axial ausgerichtete Bohrungen 42, die Druckfedern 44 aufnehmen. Die Druckfedern 44 drücken die beiden Gehäusescheiben 30, 32 voneinander weg. Sie sorgen für eine gerade ausreichende axiale Last auf das jeweilige entlastete axiale Zylinderrollenlager 22, 24 und ermöglichen damit, daß auch das jeweils entlastete axiale Zylinderrollenlager 22, 24 störungsfrei umlaufen kann. Ohne eine entsprechende Belastung bestünde die Gefahr, daß die Rollen des entlasteten Zylinderrollenlagers 22, 24 nicht einwandfrei auf den Scheiben 26, 30; 28, 32 abrollen und an diesen Verschleißerscheinungen auftreten.

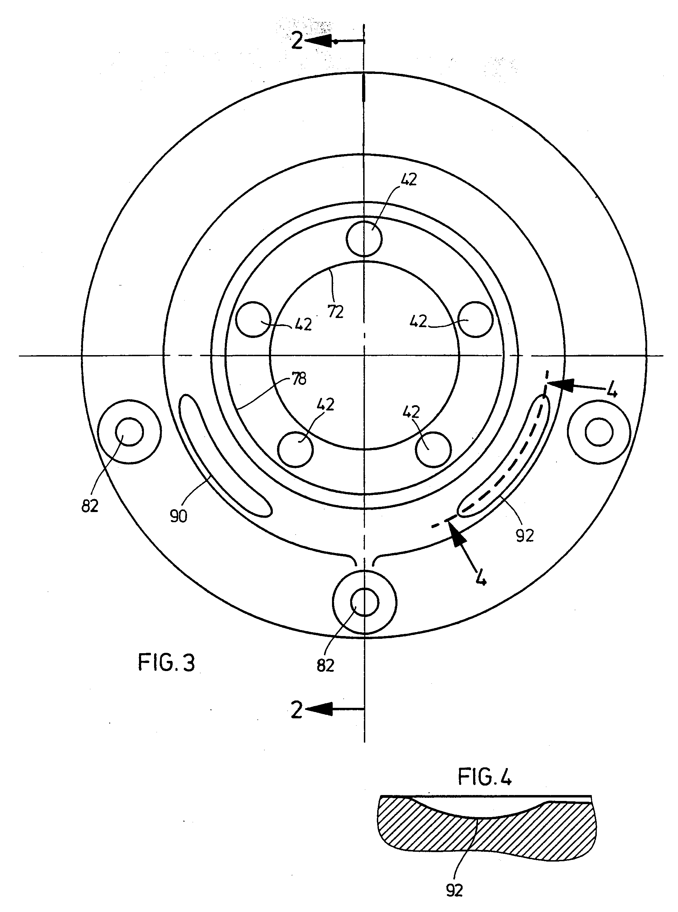

Das Lagergehäuse 40 trägt eine äußere Anlagefläche 46, die in Richtung Kegelritzel 12 der Getriebewelle 10 weist und der Befestigung der Lagerungseinheit an einem Getriebegehäuse 48 dient. Zur Befestigung sind drei Dehnschrauben 50 vorgesehen, die gemäß Fig. 3 auf der unteren Lagergehäusehälfte angeordnet sind. Damit kann bei einer Durchbiegung der Welle 10 gemäß der in Fig. 1 übertrieben dargestellten Wellenbiegelinie B und einer damit verbundenen axialen Lagerbelastung die obere Lagergehäusehälfte nach links ausweichen, so daß sich das Lagergehäuse 40 senkrecht zu der an der Wellenbiegelinie B anliegenden Tangente T ausrichtet. Zwischen die Anlagefläche 46 und das Getriebegehäuse 48 lassen sich zur Einstellung des Kegelspitzenabstands der Kegelradverzahnung Beilegscheiben 52 unterschiedlicher Stärke einfügen.

Zur Ermittlung der Beilagenscheibenstärke wird der Abstand K gemessen. Da die Anlagefläche 46 in die gleiche radiale Richtung weist wie die dem Kegelritzel 12 zugewandte Seitenfläche 54 des radialen Zylinderrollenlagers 18 und über diese hinausragt, läßt sich sehr einfach durch eine Schieblehre der Abstand K zwischen der Anlagefläche 46 und der Seitenfläche 54 messen. Dieser Abstand K läßt sich insbesondere auch dann problemlos messen, wenn die Kegelverzahnung mit einer Spiralverzahnung ausgeführt ist und längs der gestrichelten Linie 56 über den inneren Laufring 14 des radialen Zylinderrollenlagers 18 hinausragt. In diesem Fall kann die Seitenfläche 54 des äußeren Lagerringes 58, die mit der des inneren Lagerringes 16 übereinstimmt, als Bezugsfläche dienen. Der äußere Lagerring enthält zwei seitliche Borde 59, durch die die Lagerrollen axial festgelegt sind.

Zur Zuführung des Schmiermittels zu den axialen Zylinderrollenlagern 22, 24 ist eine axiale Bohrung 60 in der Getriebewelle 10 vorgesehen. Von dieser Bohrung 60 zweigen zwei radial nach oben gerichtete Querbohrungen 62, 64 ab, die auf der Wellenoberfläche jeweils zentral unter dem zugehörigen Zylinderrollenlager 22, 24 münden. Im Bereich der jeweiligen Austrittsöffnung ist in die Oberfläche der Getriebewelle eine Nut 66, 68 eingelassen, die beispielsweise die Form einer ovalen Tasche aufweist, deren Längsachse parallel zur Wellenachse und deren Querachse in Umfangsrichtung ausgerichtet sind. Diese Ausbildung der Taschen ermöglicht eine gleichmäßige und dosierte Verteilung des Schmiermittels über die axiale Erstreckung des Zylinderrollenlagers 22, 24.

Der äußere Lagerring 58 des radialen Zylinderrollenlagers 18 wird in einer Bohrung 70 des Getriebegehäuses 48 geführt und stützt sich an diesem in radialer Richtung ab. Das radiale Zylinderrollenlager 18 nimmt damit nur die radialen Kräfte auf und führt diese an das Getriebegehäuse 48 weiter. Die beiden axialen Zylinderrollenlager 22, 24 nehmen ausschließlich die axialen Kräfte auf, die sowohl in die eine oder in die andere axiale Richtung wirken können, und leiten die Kräfte über das Lagergehäuse 40 an das Getriebegehäuse 48 weiter.

Bei dem Lagergehäuse 40 handelt es sich im wesentlichen um ein flaches, kreisförmiges Bauteil mit einer zentralen Bohrung 72, deren Durchmesser dem Außendurchmesser der Getriebewelle 10 angepaßt ist. In einem konzentrisch ausgebildeten Innenring 74 befindet sich auf beiden Seiten je eine Ausdrehung 76, 78 zur Aufnahme der Gehäusescheiben 30, 32. Im Bereich seines Umfangs trägt das Lagergehäuse 40 einen flanschartigen Außenring 80, in dem sich Gewindebohrungen 82 für die Schrauben 50 befinden.

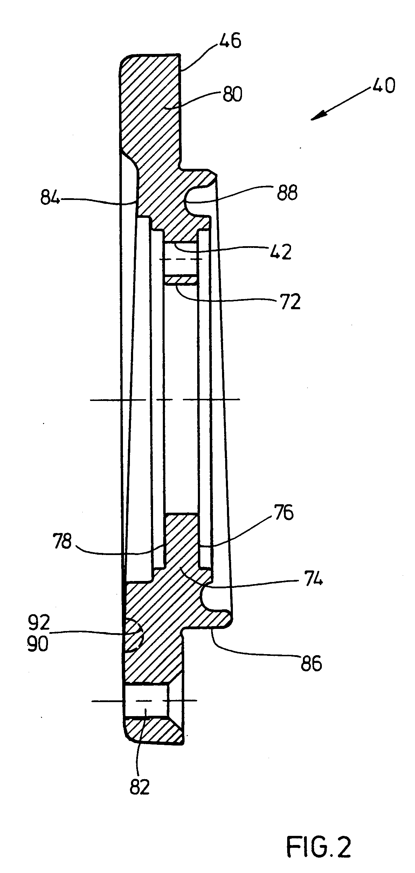

Der Bereich zwischen dem Innenring 74 und dem Außenring 80 des Lagergehäuses 40 ist im Querschnitt keilförmig ausgebildet. Die keilförmige Ausbildung ergibt sich durch eine Ausnehmung 84, die sich auf der gemäß Fig. 2 linken Seite des Lagergehäuses 40 befindet und die oben tiefer als unten in das Lagergehäuse 40 eingreift.

Auf der gegenüberliegenden rechten Seite ist ein Ansatz 86 am Lagergehäuse 40 angeformt, der unten weiter über den Außenring 80 hervorragt als oben. In diesen Ansatz 86 ist eine ringförmige Nut 88 eingebracht, die oben tiefer in das Bauteil eingreift als unten. Durch diese Ausbildung ist die Steifigkeit des Lagergehäuses 40 in Umfangsrichtung nicht homogen. Vielmehr nimmt die Steifigkeit in Umfangsrichtung von unten nach oben ab. Bei einer Durchbiegung der Getriebewelle und damit auftretenden axialen Kräften gibt das Lagergehäuse 40 durch die unterschiedliche Steifigkeit im Bereich zwischen dem Innenring 74 und dem Außenring 80 nach, so daß die Belastung der axialen Zylinderrollenlager 22, 24 in Umfangsrichtung in etwa gleiche Werte einnimmt.

Bei der beschriebenen Ausbildung des Lagergehäuses 40 kann es bei Biegebelastung jedoch zu einer stärkeren Verformung längs einer außerhalb der Achse liegenden Linie kommen. Um einer Knickbildung entgegen zu wirken, wird die Materialstärke des Lagergehäuses 40 punktuell vermindert. Zu diesem Zweck sind auf der der Nut 88 gegenüberliegenden Seite in den unteren Bereich des Lagergehäuses 40 symmetrisch zur vertikalen Mittellinie zwei Taschen 90, 92 eingelassen, deren längs der Linie 3 - 3 verlaufender Querschnitt im wesentlichen kreissegmentartig ausgebildet und in Fig. 4 dargestellt ist. Der Querschnitt in radialer Richtung des Lagergehäuses 40 ist durch eine gestrichelte Linie in Fig. 2 dargestellt.

Die Montage der Lagerungseinheit läßt sich folgendermaßen vornehmen:
Auf die Getriebewelle 10 wird das radiale Zylinderrollenlager 18, das erste axiale Zylinderrollenlager 22, das Lagergehäuse 40, in dessen Bohrungen 42 die Druckfedern 44 eingesetzt sind, und das zweite axiale Zylinderrollenlager 24 aufgeschoben. Sodann wird ein geeigneter Sicherungsring 38 eingesetzt, der so ausgewählt wird, daß das axiale Spiel der Lager 18, 22, 24 auf der Getriebewelle 10 innerhalb der geforderten Toleranzen liegt. Die derart vormontierte Lagerungseinheit läßt sich nun in die Bohrung 70 des Getriebegehäuses 48 einsetzen und an dieser durch die Schrauben 50 befestigen. Zur Einstellung des Kegelspitzenabstands der Kegelradverzahnung läßt sich vor dem Einsetzen der Lagerungseinheit in das Getriebegehäuse 48 der Abstand zwischen der Anlagefläche 46 und der Seitenfläche 54 messen und Beilegscheiben 52 geeigneter Dicke zwischen das Lagergehäuse 40 und das Getriebegehäuse 48 einfügen.

Für die Montage und Demontage der Lagerungseinheit sowie für die Einstellung der axialen Lage der Getriebewelle 10 sind weder Spezialwerkzeuge noch spezielle Meßvorrichtungen erforderlich. Die Montage und Demontage ist einfach und auch durch weniger qualifiziertes Personal durchführbar.

## Patentansprüche

1. Lagerungseinheit für eine Biegekräften ausgesetzte, axiale Kräfte aufnehmende Getriebewelle (10) mit wenigstens einem radialen Zylinderrollenlager (18), dessen innerer Lagerring (16) sich radial sowie in einer axialen Richtung an der Welle (10) und dessen äußerer Lagerring (58) sich radial an einem Getriebegehäuse (48) abstützen, und mit zwei Axiallagern, die beidseits eines sich an dem Getriebegehäuse (48) befestigbaren Lagergehäuses (40) angeordnet sind und sich an diesem abstützen, wobei sich das dem radialen Zylinderrollenlager (18) zugewandte Axiallager in der genannten axialen Richtung an dem inneren Lagerring (16) des radialen Zylinderrollenlagers (18) abstützt und wobei das radiale Zylinderrollenlager (18) und die Axiallager gegen eine axiale Verschiebung auf der Welle (10) festgelegt sind, dadurch gekennzeichnet, daß die Axiallager axiale Zylinderrollenlager (22, 24) sind und daß das Lagergehäuse (40) und/oder dessen Befestigung am Getriebegehäuse (48) derart nachgiebig ausgebildet sind, daß sich das Lagergehäuse (40) mit seinen Bereichen, an denen sich die axialen Zylinderrollenlager (22, 24) abstützen, bei einer Wellendurchbiegung der Neigung der Getriebewelle (10) anpaßt.

2. Lagerungseinheit nach Anspruch 1, dadurch gekennzeichnet, daß der äußere Lagerring (58) des radialen Zylinderrollenlagers (18) durch seitliche Borde seine Rollen gegen eine axiale Verschiebung festlegt und daß die Lagerungseinheit bestehend aus den radialen und den axialen Zylinderrollenlagern (18, 22, 24) sowie dem Lagergehäuse (40) als vormontierbare Baueinheit ausgebildet ist, die sich komplett in das Getriebegehäuse (48) einsetzen und aus diesem herausnehmen läßt.

3. Lagerungseinheit nach Anspruch 1 oder 2, dadurch gekennzeichnet, daß das Lagergehäuse (40) flanschartig ausgebildet ist und eine sich radial erstreckende Anlagefläche (46) aufweist, der eine korrespondierende radiale Anlagefläche des Getriebegehäuses (48) gegenübersteht, und daß zwischen den Anlageflächen (46) des Lagergehäuses (40) und des Getriebegehäuses (48) wenigstens eine Beilegscheibe (52) einfügbar ist.

4. Lagerungseinheit nach einem der Ansprüche 1 bis 3, dadurch gekennzeichnet, daß beidseits des Lagergehäuses (40) je eine das Lagergehäuse (40) tragende Gehäusescheibe (30, 32) eines zugehörigen axialen Zylinderrollenlagers (22, 24) anliegt, und daß im Lagergehäuse (40) wenigstens eine Ausnehmung (42) vorgesehen ist, die wenigstens ein Federelement (44) aufnimmt, durch das die beiden Gehäusescheiben (30, 32) voneinander weggedrückt werden.

5. Lagerungseinheit nach einem der Ansprüche 1 bis 4, dadurch gekennzeichnet, daß die dem radialen Zylinderrollenlager (18) axial abgewandte Seite der äußeren Wellenscheibe (28) des äußeren axialen Zylinderrollenlagers (24) durch einen in eine Nut (39) der Welle (10) eingreifenden Sicherungsring (38) gegen axiale Verschiebung auf der Welle (10) gesichert ist, und daß die Nut (39) so breit gewählt ist, daß sie verschieden dicke Sicherungsringe (38) aufzunehmen vermag.

6. Lagerungseinheit nach einem der Ansprüche 1 bis 5, dadurch gekennzeichnet, daß die Welle (10) für die Schmiermittelzufuhr zu den axialen Zylinderrollenlagern (22, 24) eine im wesentlichen axial ausgerichtete Bohrung (60) und wenigstens eine mit dieser verbundene Querbohrung (62, 64) aufweist und daß die Querbohrung (62, 64) in eine Nut (66, 68) mündet, die auf der Mantelfläche der Welle (10) im Bereich eines axialen Lagers (22, 24) liegt.

7. Lagerungseinheit nach einem der Ansprüche 1 bis 6, dadurch gekennzeichnet, daß das Lagergehäuse (40) mit dem Getriebegehäuse (48) durch axial ausgerichtete Schrauben (50), vorzugsweise Dehnschrauben, die bei axialer Belastung der Welle (10) eine Verkippung des Lagergehäuses (40) gegen das Getriebegehäuse (48) zulassen, verschraubbar ist.

8. Lagerungseinheit nach Anspruch 7, dadurch gekennzeichnet, daß die Schrauben (50) nicht gleichmäßig auf dem Umfang des Lagergehäuses (40) verteilt sind, sondern daß sich in Umfangsbereichen des Lagergehäuses (40), die erhöhten Kräften infolge von Wellendurchbiegungen ausgesetzt sind, weniger Schrauben (50) angeordnet sind als in weniger stark belasteten Umfangsbereichen.

9. Lagerungseinheit nach einem der Ansprüche 1 bis 8, dadurch gekennzeichnet, daß das Lagergehäuse (40) wenigstens in einem Bereich zwischen einer Angriffsfläche des Wellenlagers (22, 24) und einer Angriffsfläche des Getriebegehäuses (48) in Umfangsrichtung Abschnitte unterschiedlicher Steifigkeit aufweist.

10. Lagerungseinheit nach Anspruch 9, dadurch gekennzeichnet, daß das Lagergehäuse (40) im wesentlichen konzentrisch ausgebildet ist und in einem konzentrischen Ringbereich zwischen einem radial innenliegenden Flanschbereich, an dem die axialen Zylinderrollenlager (22, 24) anliegen, und einem radial außenliegenden Flanschbereich, der der Befestigung am Getriebegehäuse (48) dient, in Umfangsrichtung Bereiche unterschiedlicher axialer Dicke aufweist.

11. Lagerungseinheit nach Anspruch 9 oder 10, dadurch gekennzeichnet, daß das Lagergehäuse (40) in einem konzentrischen Ringbereich zwischen einem radial innenliegenden Flanschbereich, an dem die axialen Zylinderrollenlager (22, 24) anliegen und einem radial außenliegenden Flanschbereich, der der Befestigung am Getriebegehäuse (48) dient, wenigstens auf einer seiner beiden Seitenflächen eine Ringnut (88) mit in Umfangsrichtung unterschiedlicher axialer Tiefe aufweist, wobei die Ringnut (88) konzentrisch zu einer Achse verläuft, die gegenüber der Achse des Lagergehäuses (10) geneigt ist.

12. Lagerungseinheit nach einem der Ansprüche 9 bis 11, dadurch gekennzeichnet, daß auf wenigstens einer Seitenfläche des Lagergehäuses (40) in dem Ringbereich sich im wesentlichen in Umfangsrichtung erstreckende Taschen (90, 92) vorgesehen sind.

## Claims

1. A bearing assembly for a transmission shaft (10) subject to bending forces and taking axial loads, with at least one radial cylindrical roller bearing (18) whose inner race ring (16) is supported both radially and in one axial direction on the shaft (10) and whose outer race ring (58) is supported radially by a transmission housing (48), and with two thrust bearings which are arranged on the two sides of and are supported by a bearing housing (40) which can be fixed to the transmission housing (48), wherein the thrust bearing facing towards the radial cylindrical roller bearing (18) in the said axial direction is supported on the inner race ring (16) of the radial cylindrical roller bearing (18) and wherein the radial cylindrical roller bearing (18) and the thrust bearing are prevented from axial displacement on the shaft (10), characterized in that the thrust bearings are cylindrical roller thrust bearings (22, 24) and in that the bearing housing (40) and/or its attachment to the transmission housing (48) is/are so designed to yield that the bearing housing (40) adapts its regions whereat the cylindrical roller thrust bearings (22, 24) bear to the inclination of the transmission shaft (10) when there is flexure of the shaft.

2. A bearing assembly according to claim 1, characterized in that the outer race ring (58) of the radial cylindrical roller bearing (18) secures its rollers against axial displacement by lateral rims and in that the bearing assembly consisting of the radial and thrust cylindrical roller bearings (18, 22, 24) as well as the bearing housing (40) is designed as a pre-assembled unit, which can be fitted complete in and removed from the transmission housing (48).

3. A bearing assembly according to claim 1 or 2, characterized in that the bearing housing (40) is formed like a flange and has a radially extending abutment surface (46) which faces a corresponding radial abutment surface of the transmission housing (48) and in that at least one washer (52) can be fitted between the abutment surfaces (46) of the bearing housing (40) and the transmission housing (48).

4. A bearing assembly according to any of claims 1 to 3, characterized in that on each of the two sides of the bearing housing (40) there adjoins a housing ring (30, 32) of an associated cylindrical roller thrust bearing (22, 24), the rings carrying the bearing housing (40), and in that at least one recess (42) is provided in the bearing housing (40), receiving at least one spring element (44), through which the two housing rings (30, 32) are urged away from each other.

5. A bearing assembly according to any of claims 1 to 4, characterized in that the side of the outer shaft ring (28) of the outer cylindrical roller thrust bearing (24) which faces the radial cylindrical roller bearing (18) is secured against axial movement on the shaft (10) by a snap ring (38) engaging in a groove (39) in the shaft (10), and in that the groove (39) is made so wide that it can accept snap rings (38) of different thicknesses.

6. A bearing assembly according to any of claims 1 to 5, characterized in that the shaft (10) has at least one substantially axially aligned bore (60) and at least one transverse bore (62, 64) connected thereto, for the lubricant feed to the cylindrical roller thrust bearings (22, 24) and in that the transverse bore (62, 64) opens into a groove (66, 68) which lies on the peripheral surface of the shaft (10) in the region of a thrust bearing (22, 24).

7. A bearing assembly according to any of claims 1 to 6, characterized in that the bearing housing (40) can be screwed to the transmission housing (48) by axially aligned bolts (50), preferably expansible bolts, which allow the bearing housing (40) to tilt relative to the transmission housing (48) with axial loading of the shaft (10).

8. A bearing assembly according to claim 7, characterized in that the bolts (50) are not distributed uniformly about the periphery of the bearing housing (40) but so that fewer bolts (50) are arranged in the peripheral regions of the bearing housing (40) which are subjected to the higher forces on account of flexure of the shaft than in the less strongly loaded peripheral regions.

9. A bearing assembly according to any of claims 1 to 8, characterized in that the bearing housing (40) has sections of different stiffness around the peripheral direction at least in a region between an abutment surface of the shaft bearing (22, 24) and an abutment surface of the transmission housing (48).

10. A bearing assembly according to claim 9, characterized in that the bearing housing (40) is formed substantially concentrically and has regions of different axial thickness around the peripheral direction in a concentric annular region between a radially inner flange region on which the cylindrical roller thrust bearings (22, 24) bear and a radially outer flange region which serves for attachment to the transmission housing (48).

11. A bearing assembly according to claim 9 or 10, characterized in that the bearing housing (40) has an annular groove (88) in at least one of its side faces with a varying axial depth around the peripheral direction, the groove being in a concentric annular region between an inner radial flange region on which the cylindrical roller thrust bearings (22, 24) bear and a radially outer flange region which serves for attachment to the transmission housing (48) and the annular groove (88) runing concentrically about an axis which is inclined relative to the axis of the bearing housing (40).

12. A bearing assembly according to any of claims 9 to 11, characterized in that pockets (90, 92) extending substantially in the peripheral direction are provided in at least one side face of the bearing housing (40) in the annular region.

## Revendications

1. Ensemble de palier pour un arbre de transmission (10) recevant des forces axiales et exposé à des forces latérales, avec au moins un roulement radial (18) à rouleaux cylindriques dont la bague de roulement intérieure (16) s'appuie radialement ainsi que dans une direction axiale contre l'arbre (10) et dont la bague de roulement extérieure (58) s'appuie radialement contre un carter de transmission (48), et avec deux paliers à charge axiale qui sont disposés de part et d'autre d'un corps de palier (40) pouvant être fixé au carter de transmission (48) et s'appuient contre ce corps, le palier à charge axiale tourné vers le roulement radial (18) à rouleaux cylindriques s'appuyant dans la direction axiale précitée contre la bague de roulement intérieure (16) du roulement radial (18) à rouleaux cylindriques, et le roulement radial (18) à rouleaux cylindriques et les paliers à charge axiale étant empêchés de se déplacer axialement sur l'arbre (10), **caractérisé** en ce que les paliers à charge axiale sont des roulements axiaux (22, 24) à rouleaux cylindriques, et en ce que le corps de palier (40) et/ou sa fixation au carter de transmission (48) sont réalisés flexibles de telle sorte que les régions du corps de palier (40) contre lesquelles s'appuient les roulements axiaux (22, 24) à rouleaux cylindriques s'adaptent à l'inclinaison de l'arbre de transmission (10) lors d'un fléchissement de cet arbre.

2. Ensemble de palier selon la revendication 1, **caractérisé** en ce que la bague de roulement extérieure (58) du roulement radial (18) à rouleaux cylindriques empêche lesdits rouleaux de se déplacer axialement par des collets latéraux, et en ce que l'ensemble de palier, constitué des roulements radiaux et axiaux à rouleaux cylindriques (18, 22, 24) ainsi que du corps de palier (40), est conçu comme unité de construction pouvant être préassemblée, qui peut être installée dans le carter de transmission (48), et en être désinstallée, à l'état complet.

3. Ensemble de palier selon la revendication 1 ou 2, **caractérisé** en ce que le corps de palier (40) est conçu comme bride et présente une face d'application (46) s'étendant radialement qui fait face à une face d'application radiale correspondante du carter de transmission (48), et en ce qu'au moins une rondelle de calage (52) peut être insérée entre les faces d'application (46) du corps de palier (40) et du carter de transmission (48).

4. Ensemble de palier selon l'une quelconque des revendications 1 à 3, **caractérisé** en ce qu'une bague côté corps de palier respective (30, 32), portant le corps de palier (40), d'un roulement axial respectif (22, 24) à rouleaux cylindriques s'applique de part et d'autre du corps de palier (40), et en ce qu'est prévu dans le corps de palier (40) au moins un évidement (42) qui loge au moins un élément de ressort (44) par lequel les deux bagues côté corps de palier (30, 32) sont écartées l'une de l'autre.

5. Ensemble de palier selon l'une quelconque des revendications 1 à 4, **caractérisé** en ce que le côté, de la bague extérieure côté arbre (28) du roulement axial (24) à rouleaux cylindriques, qui est axialement éloigné du roulement radial (18) à rouleaux cylindriques est empêché de se déplacer axialement sur l'arbre (10) par un circlip (38) s'engageant dans une rainure (39) de l'arbre (10), et en ce que la rainure (39) est choisie suffisamment large pour pouvoir recevoir des circlips (38) de différentes épaisseurs.

6. Ensemble de palier selon l'une quelconque des revendications 1 à 5, **caractérisé** en ce que l'arbre (10) présente, pour l'alimentation en lubrifiant des roulements axiaux (22, 24) à rouleaux cylindriques, un perçage (60) orienté essentiellement axialement et au moins un perçage transversal (62, 64) communiquant avec le perçage (60), et en ce que le perçage transversal (62, 64) débouche dans une rainure (66, 68) qui se trouve sur la surface extérieure de l'arbre (10) dans la région d'un roulement axial (22, 24).

7. Ensemble de palier selon l'une quelconque des revendications 1 à 6, **caractérisé** en ce que le corps de palier (40) peut être boulonné au carter de transmission (48) par des vis (50) orientées axialement, de préférence des vis expansibles, qui autorisent un basculement du corps de palier (40) par rapport au carter de transmission (48) lors d'une sollicitation axiale de l'arbre (10).

8. Ensemble de palier selon la revendication 7, **caractérisé** en ce que les vis (50) ne sont pas uniformément réparties sur la périphérie du corps de palier (40) mais, au contraire, moins de vis (50) sont disposées dans les régions de la périphérie du corps de palier (40) qui sont exposées à des forces accrues suite à des fléchissements de l'arbre, que dans les régions de la périphérie qui sont moins fortement sollicitées.

9. Ensemble de palier selon l'une quelconque des revendications 1 à 8, **caractérisé** en ce que le corps de palier (40) présente, en direction circonférentielle, des régions de rigidités différentes au moins dans une zone comprise entre une face d'application du roulement axial (22, 24) et une face d'application du carter de transmission (48).

10. Ensemble de palier selon la revendication 9, **caractérisé** en ce que le corps de palier (40) est réalisé essentiellement concentrique et présente, en direction circonférentielle, des régions d'épaisseurs axiales différentes dans une zone annulaire concentrique comprise entre une partie de bride radialement intérieure contre laquelle s'appliquent les roulements axiaux (22, 24) à rouleaux cylindriques et une partie de bride radialement extérieure servant à la fixation au carter de transmission (48).

11. Ensemble de palier selon la revendication 9 ou 10, **caractérisé** en ce que le corps de palier (40) présente, au moins sur une de ses deux faces latérales, dans une zone annulaire concentrique comprise entre une partie de bride radialement intérieure contre laquelle s'appliquent les roulements axiaux (22, 24) à rouleaux cylindriques et une partie de bride radialement extérieure servant à la fixation au carter de transmission (48), une rainure annulaire (88) de profondeur axiale différente en direction circonférentielle, la rainure annulaire (88) s'étendant concentriquement à un axe qui est incliné par rapport à l'axe du corps de palier (40).

12. Ensemble de palier selon l'une quelconque des revendications 9 à 11, **caractérisé** en ce que des poches (90, 92), s'étendant essentiellement en direction circonférentielle, sont prévues dans la zone annulaire sur au moins une face latérale du corps de palier (40).
